# EUROPÄISCHE PATENTANMELDUNG

(11) **EP 0 776 693 A2**
(43) Veröffentlichungstag der Anmeldung: **04.06.1997**
(21) Anmeldenummer: 96250274.6
(22) Anmeldetag: 29.11.1996
(51) Int. Cl.: B01J 19/00

(54) **Beheizbares Reaktionsgefäss**

(30) Priorität: 29.11.1995 DE 19546154; 22.02.1996 DE 19608297
(71) Anmelder: Dr. Bruno Lange GmbH, D-14163 Berlin (DE)
(72) Erfinder: Golitz, Andreas, 47445 Moers (DE); Kussman, Michael, 40476 Düsseldorf (DE); Gassner, Bernd, 41469 Neuss (DE)
(74) Vertreter: Christiansen, Henning, Dipl.-Ing.

(57) **Zusammenfassung**

Beheizbares Reaktionsgefäß (1, RG) zur Aufnahme einer Flüssigkeitsprobe, insbesondere für photometrische Untersuchungen, mit einer ersten Öffnung (4) zum Einbringen der Flüssigkeitsprobe und einer zweiten Öffnung (10) zur Entleerung des Reaktionsgefäßes (1, RG), einem steuerbaren Ventil (5) zum druckdichten Verschließen der Öffnungen (4, 10), einer die Außenwand des Reaktionsgefäßes (1, RG) thermisch kontaktierenden Heizvorrichtung (9) zur Erhitzung der Flüssigkeitsprobe und einem Temperaturfühler (16) zur Messung der Temperatur, wobei das Reaktionsgefäß (1, RG) in zwei übereinanderliegende Bereiche (2, 3) aufgeteilt ist, von denen der untere Bereich (3) zur Aufheizung der Flüssigkeitsprobe dient und deshalb zur Erreichung eines günstigen Verhältnisse zwischen beheizbarer Außenfläche und zu beheizendem Flüssigkeitsvolumen einen relativ kleinen Querschnitt aufweist, während der obere Bereich (2) eine Meßzone zur Durchführung einer photometrischen Untersuchung aufweist und deshalb zur Vergrößerung der photometrischen Meßstrecke und damit der Meßempfindlichkeit einen größeren Querschnitt aufweist.

## Beschreibung

Die Erfindung betrifft ein beheizbares Reaktionsgefäß, insbesondere für photometrische Untersuchungen, gemäß dem Oberbegriff des Anspruchs 1.

Es ist bekannt, eine Flüssigkeit in einem aus Glas bestehenden Reaktionsgefäß durch Mikrowellenbestrahlung zu erhitzen. Vorteilhaft bei einer Erhitzung der Flüssigkeit durch Mikrowellenbestrahlung ist, daß die Heizleistung verteilt über das gesamte zu erhitzende Flüssigkeitsvolumen eingekoppelt wird, während bei einer herkömmlichen auf Wärmeleitung beruhenden Erhitzung die Wärme nur an der Kontaktfläche von Heizelement und Flüssigkeit eingeleitet wird. Die Flüssigkeit wird hierbei also relativ gleichmäßig erhitzt. Andererseits ist die Erhitzung einer Flüssigkeit durch Mikrowellenbestrahlung relativ aufwendig, da ein Mikrowellengenerator erforderlich ist und die Mikrowellenstrahlung zur Vermeidung einer Gesundheitsgefährdung des Bedienungspersonals durch geeignete Maßnahmen abgeschirmt werden muß.

Der Erfindung liegt somit die Aufgabe zugrunde, ein beheizbares Reaktionsgefäß zu schaffen, das die Erhitzung einer Flüssigkeit in einfacher Weise ermöglicht.

Die Aufgabe wird durch die kennzeichnenden Merkmale des Anspruchs 1 gelöst.

Die Erfindung schließt die technische Lehre ein, ein Reaktionsgefäß in zwei übereinander angeordnete Bereiche unterschiedlichen Querschnitts aufzuteilen, wobei der untere Bereich zur Aufnahme der Flüssigkeitsprobe dient und zur Erreichung eines günstigen Verhältnisses von beheizbarer Außenfläche und zu erhitzendem Flüssigkeitsvolumen einen kleineren Querschnitt aufweist als der obere Bereich, der zur Aufnahme des sich bei der Erhitzung der Flüssigkeitsprobe bildenden Dampfes dient und eine Meßzone zur Durchführung einer photometrischen Untersuchung der Flüssigkeitsprobe aufweist. Auf diese Weise ist eine Reduzierung des Probenvolumens und der für die chemische Reaktion notwendigen Chemikalien bis auf wenige Milliliter möglich.

Die Erfindung geht von der Erkenntnis aus, das bei der Erhitzung einer Flüssigkeit durch Wärmeleitung die Erwärmung wesentlich abhängt von dem Verhältnis der Heizfläche zu dem zu erhitzenden Flüssigkeitsvolumen. Für eine rasche Erwärmung ist hierbei ein großes Verhältnis von Heizfläche und zu erhitzendem Flüssigkeitsvolumen erstrebenswert. Betrachtet man nun die in einem Reaktionsgefäß befindliche Flüssigkeit und nimmt einen zylindrischen Querschnitt des Reaktionsgefäßes an, so wächst das zu erhitzende Flüssigkeitsvolumen quadratisch mit dem Radius des Reaktionsgefäßes, während die Heizfläche, also die Mantelfläche des Reaktionsgefäßes, proportional dem Radius des Reaktionsgefäßes ist. Dies bedeutet, daß das Verhältnis von Heizfläche und zu erhitzendem Flüssigkeitsvolumen mit zunehmendem Querschnitt des Reaktionsgefäßes hinsichtlich einer raschen Erwärmung des Flüssigkeitsvolumens immer schlechter wird. Eine Verringerung des Querschnitts ermöglicht deshalb eine schnellere Erwärmung.

Bei einer photometrischen Untersuchung steigt jedoch die Empfindlichkeit der Messung mit zunehmender Schichtdicke des von dem Photometer durchstrahlten Flüssigkeitsvolumens. Eine Verringerung des Querschnitts des Reaktionsgefäßes führt deshalb bei einer photometrischen Untersuchung zu einer unerwünschten Verschlechterung der Meßempfindlichkeit.

Das erfindungsgemäße Reaktionsgefäß ist deshalb in zwei übereinander angeordnete Bereiche aufgeteilt, wobei der untere Bereich zur Aufnahme der zu erhitzenden Flüssigkeit dient und dementsprechend einen relativ kleinen Querschnitt aufweist, um ein günstiges Verhältnis zwischen der beheizbaren Außenfläche und dem zu erhitzenden Flüssigkeitsvolumen zu erreichen und somit ein schnelles Aufheizen zu ermöglichen.

Der hieran anschließende obere Bereich dient dagegen zur Durchführung einer photometrischen Untersuchung der Flüssigkeitsprobe und weist dementsprechend einen gegenüber dem unteren Bereich vergrößerten Querschnitt auf, um bei der Durchführung der photometrischen Untersuchung eine große Schichtdicke des durchstrahlten Flüssigkeitsvolumens und damit eine hohe Meßempfindlichkeit zu erreichen. Zur Erreichung dieses erfindungsgemäßen Vorteils ist es deshalb wichtig, daß das Reaktionsgefäß so weit befüllt wird, daß der Flüssigkeitsspiegel im oberen Bereich liegt und die photometrische Meßzone einschließt. Um nicht zuviel Flüssigkeit einfüllen zu müssen, ist es deshalb vorteilhaft, die photometrische Meßzone im unteren Teil des oberen Bereichs vorzusehen.

Darüber hinaus dient der obere Bereich zur Aufnahme der bei der Erhitzung der Flüssigkeit sich bildenden Dampfs.

Die Erhitzung der Flüssigkeit erfolgt hierbei durch Wärmeleitung von einer die Außenwand des Reaktionsgefäßes mindestens im unteren Bereich thermisch kontaktierenden Heizvorrichtung. In einer bevorzugten Ausführungsform der Erfindung weist die Heizvorrichtung einen elektrisch betriebenen Heizdraht auf, der beispielsweise in mehreren Windungen spiralförmig um das Reaktionsgefäß herumgewickelt ist und aufgrund der ohmschen Verluste erhitzt wird. Die Erfindung ist jedoch nicht auf elektrisch betriebene Heizvorrichtung beschränkt. Es ist beispielsweise auch möglich, eine heiße Flüssigkeit oder ein heißes Gas außen an dem Reaktionsgefäß vorbei zu leiten. Auch ist es möglich, das Reaktionsgefäß in einem Flüssigkeitsbad zu erhitzen.

Wenn die zu untersuchende Flüssigkeit auf die vorstehend beschriebene Weise bis in den Bereich des Siedepunkts erhitzt wird, siedet ein Teil der Flüssigkeit, so daß sich in dem ursprünglich luftgefüllten oberen Teilvolumen des Reaktionsgefäßes ein Luft-Dampf-Gemisch bildet. Wird das Reaktionsgefäß nur im unteren Bereich erhitzt, so wird der Dampf im oberen Bereich an den dort kälteren Gefäßwänden kondensieren. Um dies zu verhindern und die Erwärmung der Flüssigkeit weiter zu beschleunigen ist deshalb in einer weiterbildenden Variante der Erfindung vorgesehen, das Reaktionsgefäß sowohl im unteren Bereich als auch im oberen Bereich zu beheizen.

In einer vorteilhaften Variante der Erfindung dient das Reaktionsgefäß - wie bereits vorstehend erwähnt - zur Durchführung einer photometrischen Analyse. Hierzu ist eine vorzugweise als Leuchtdiode ausgeführte Lichtquelle vorgesehen, die das aus lichtdurchlässigem Material bestehende Reaktionsgefäß mit der darin befindlichen zu untersuchenden Flüssigkeit durchstrahlt. Auf der anderen Seite des Reaktionsgefäßes ist im Strahlengang der Lichtquelle ein vorzugsweise als Photodiode ausgeführter Photoempfänger vorgesehen, der die Intensität des von der Flüssigkeit durchgelassenen Lichts mißt. Aus der Änderung der Extinktion - also der Auslöschung des von der Lichtquelle emittierten Lichts durch das Reaktionsgefäß und die zu untersuchende Flüssigkeit - beim Zusetzen einer Indikatorlösung läßt sich dann die Konzentration eines bestimmten Stoffes ermitteln. Gemäß der Erfindung sind die Lichtquelle und der Photoempfänger hierbei so angeordnet, daß der Strahlengang im oberen Bereich des Reaktionsgefäßes verläuft, da wegen des im oberen Bereich relativ großen Querschnitts die Schichtdicke des durchstrahlten Flüssigkeitsvolumens relativ groß ist, was vorteilhaft zu einer hohen Meßempfindlichkeit führt.

Damit eine Schwankung der Intensität des von der Lichtquelle emittierten Lichts - beispielsweise infolge eines Alterungsprozesses der Lichtquelle - bei der Messung der Extinktion der Flüssigkeitsprobe kompensiert werden kann, ist in einer vorteilhaften Variante der Erfindung ein zweiter Photoempfänger vorgesehen, der direkt die Intensität des von der Lichtquelle emittierten Lichts ohne die Dämpfung durch die Wandung des Reaktionsgefäßes oder die Flüssigkeitsprobe mißt.

Es ist oftmals günstig, die zu untersuchende Flüssigkeit nicht nur erwärmen, sondern auch kühlen zu können. In einer weiterbildenden Variante der Erfindung ist das Reaktionsgefäß deshalb mit einer Ummantelung zur Aufnahme eines Kühlmittels umgeben. Die Ummantelung weist hierbei eine Eintrittsöffnung zum Einbringen des Kühlmittels sowie eine Austrittsöffnung zum Austreten des Kühlmittels auf. Auf diese Weise läßt sich vorteilhaft ein kontinuierlicher Kühlmittelfluß und damit eine weitgehend konstante Wärmeableitung erreichen.

Das an der Eintrittsöffnung eintretende Kühlmittel ist in der Regel kälter als das in der Ummantelung befindliche und bereits aufgewärmte Kühlmittel und hat somit eine größere Dichte. Es ist deshalb vorteilhaft, die Eintrittsöffnung unterhalb der Austrittsöffnung anzuordnen, da so verhindert wird, daß das Kühlmittel nach dem Eintreten aufgrund der größeren Dichte sofort in Richtung der Austrittsöffnung strömt und austritt, ohne Wärme aufgenommen zu haben.

In einer bevorzugten Ausführungsform der Erfindung wird als Kühlmittel Luft verwendet. Auf diese Weise läßt sich mit geringem Aufwand eine wirksame Kühlung des Reaktionsgefäßes bereitstellen und mit einem einfachen Gebläse ein relativ großer Volumenstrom erreichen.

Um bei der Erhitzung der im Reaktionsgefäß befindlichen Flüssigkeit eine Zerstörung des Reaktionsgefäßes durch einen Überdruck zu verhindern, ist in einer bevorzugten Ausführungsform im oberen Bereich des Reaktionsgefäßes ein Sicherheitsventil vorgesehen, das beim Überschreiten eines bestimmten Innendrucks öffnet und somit ein weiteres Ansteigen des Innendrucks über den konstruktionsbedingt maximal zulässigen Druck verhindert.

Die Befüllung des Reaktionsgefäßes erfolgt durch eine vorzugsweise im unteren Bereich angeordnete, durch ein steuerbares Ventil druckdicht verschließbare Öffnung. Bei einer Anordnung im unteren Bereich eignet sich diese Öffnung auch gut zur Entleerung des Reaktionsgefäßes. Hierzu ist es lediglich erforderlich, das Ventil zu öffnen, so daß die in dem Reaktionsgefäß befindliche Flüssigkeit aus der Öffnung nach unten herausläuft. Um bei der Entleerung des Reaktionsgefäßes Luft nachströmen zu lassen und somit das Auslaufen der Flüssigkeit zu erleichtern, ist in einer vorteilhaften Ausführungsform eine weitere, im oberen Bereich angeordnete Öffnung vorgesehen, die ebenfalls durch ein steuerbares Ventil verschließbar ist. Zur Entleerung des Reaktionsgefäßes werden dann beide Ventile geöffnet, so daß die Flüssigkeit durch das untere Ventil ausläuft und durch das obere Ventil Luft nachströmt. In einer bevorzugten Ausführungsform erfüllt das im oberen Bereich angeordnete Sicherheitsventil zusätzlich die Funktion der Luftöffnung. In dieser Ausführungsform ist zur Steuerung des Sicherheitsventils ein Antrieb, vorzugsweise ein elektromagnetischer Antrieb, vorgesehen.

In einer vorteilhaften Variante der Erfindung ist die Öffnung zum Befüllen bzw. Entleeren im unteren Bereich des dort zylinderförmig ausgebildeten Reaktionsgefäßes angeordnet. Das Ventil besteht in dieser Variante im wesentlichen aus einem Kolben, dessen Querschnitt an den Innenquerschnitt des Reaktionsgefäßes in dem zylinderförmig ausgebildeten Bereich angepaßt ist, so daß der Kolben in dem Reaktionsgefäß verschiebbar ist. Die Öffnung zur Befüllung bzw. Entleerung des Reaktionsgefäßes befindet sich hierbei in der Außenwand des Reaktionsgefäßes im Bereich des Hubraums des Kolbens, so daß der Kolben in seiner oberen Stellung mit seiner Flanke die Öffnung verschließt und das Reaktionsgefäß druckdicht abschließt, in der unteren Stellung die Öffnung dagegen freigibt und so ein Befüllen bzw. Entleeren des Reaktionsgefäßes ermöglicht.

Bei dieser Ausbildung des Ventils bildet die Kolbenoberseite den Boden des Reaktionsgefäßes, so daß die in dem Reaktionsgefäß befindliche Flüssigkeitssäule vorteilhaft auf ihrer gesamten Länge erhitzt werden kann, ohne daß - wie bei herkömmlichen Ventilen - unterhalb des erhitzbaren Bereichs ein nur indirekt durch Wärmeleitung von der darüber befindlichen Flüssigkeit erhitztes Teilvolumen vorhanden ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: als bevorzugtes Ausführungsbeispiel ein beheizbares Reaktionsgefäß in Teilschnittdarstellung sowie
- Figur 2: das Reaktionsgefäß aus Figur 1 als Bestandteil einer photometrischen Untersuchungsanlage.

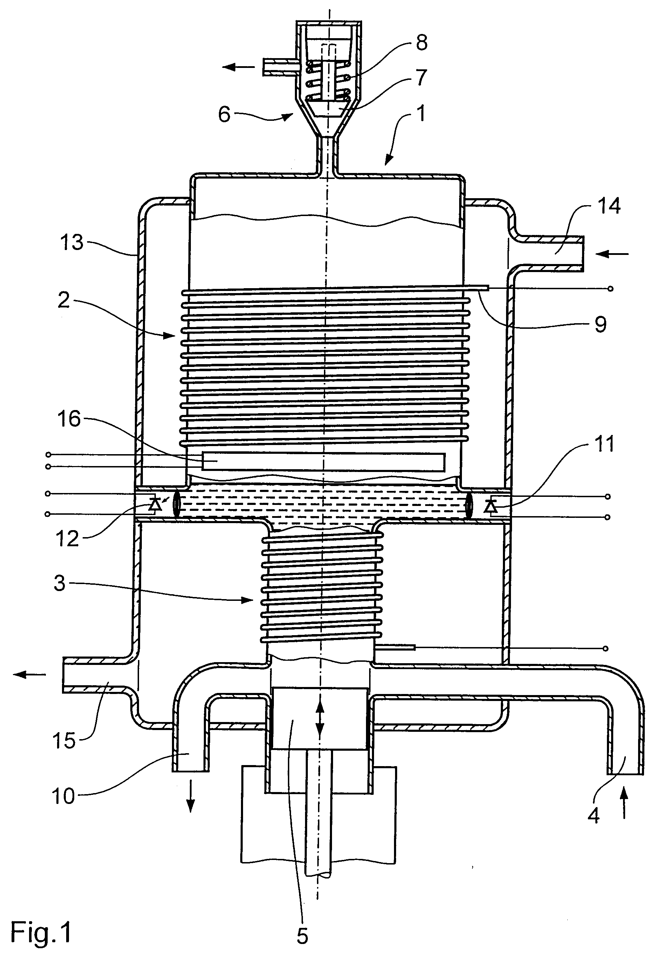

Das in Figur 1 gezeigte Reaktionsgefäß 1 dient zur Aufnahme einer Flüssigkeitsprobe für eine photometrische Untersuchung und besteht aus einem Glaskörper zylindrischen Querschnitts, der in zwei übereinander angeordnete Bereiche 2, 3 aufgeteilt ist. Der untere Bereich 3 weist - wie auch der obere Bereich 2 - einen zylindrischen Querschnitt auf und dient zur Aufnahme und Aufheizung der Flüssigkeitsprobe, die durch eine in der Wandung des Reaktionsgefäßes 1 im unteren Bereich 3 angebrachte und mit einem Anschlußstutzen 4 zur Verbindung mit einem Förderschlauch versehene Öffnung in das Reaktionsgefäß 1 eingebracht werden kann. Die Entfernung der Flüssigkeitsprobe erfolgt durch eine zweite Öffnung, die mit einem weiteren Anschlußstutzen 10 verbunden ist. Um diese Öffnungen 4, 10 während der Erhitzung der Flüssigkeitsprobe schließen zu können, ist ein steuerbares Ventil vorgesehen, das im wesentlichen aus einem in senkrechter Richtung verschiebbaren Kolben 5 zylindrischen Querschnitts besteht. Der Außenquerschnitt dieses Kolbens 5 ist an den Innenquerschnitt des im unteren Bereich 3 in der Umgebung der Öffnung zylindrisch ausgebildeten Reaktionsgefäßes 1 angepaßt, so daß der Kolben 5 in dem Reaktionsgefäß 1 in senkrechter Richtung verschiebbar ist und im geschlossenen Zustand dessen Bodenfläche bildet.

Die Steuerung des Ventils - also die Verschiebung des Kolbens 5 - erfolgt durch einen hier nur angedeuteten elektromagnetischen Stellantrieb, der den Kolben 5 wahlweise in eine untere oder obere Stellung bringt, wobei der Kolben 5 in der oberen Stellung mit seiner Seitenfläche die Öffnung vollständig abdeckt und das Reaktionsgefäß 1 somit druckdicht verschließt. Um die Öffnung in dieser Stellung vollständig abdecken zu können, ist sowohl die Kolbenlänge als auch der Hub zwischen den beiden Kolbenstellungen größer als der Durchmesser der zylindrisch ausgeführten Öffnung. In dieser Stellung bildet die Kolbenfläche den Boden des Reaktionsgefäßes 1.

In der unteren Stellung gibt der Kolben 5 dagegen die Öffnung frei, so daß das Reaktionsgefäß 1 befüllt oder entleert werden kann.

Sowohl beim Befüllen als auch beim Entleeren des Reaktionsgefäßes 1 besteht das Problem, daß sich das in dem Reaktionsgefäß befindliche Flüssigkeitsvolumen ändert, so daß entsprechend Luft ein- oder ausströmen muß, um die Ausbildung eines Vakuums bzw. eines Überdrucks zu verhindern.

Im oberen Bereich 2 des Reaktionsgefäßes 1 ist deshalb ein elektromagnetisch betätigbares Ventil 6 angeordnet, daß bei einer Befüllung oder Entleerung geöffnet wird, um Luft ein- oder ausströmen zu lassen. Darüber hinaus dient dieses Ventil 6 als Sicherheitsventil, um während der Erhitzung der Flüssigkeitsprobe einen Überdruck in dem Reaktionsgefäß 1 zu verhindern. Das Sicherheitsventil 6 weist hierzu einen konisch geformten Kolben 7 auf, der von einer Feder 8 in eine entsprechende Passung gedrückt wird und die Öffnung im Normalzustand verschließt. Das Sicherheitsventil 6 öffnet also erst dann, wenn der Druck in dem Reaktionsgefäß 1 ausreicht, um die Federkraft zu überwinden.

Zur Beheizung des Reaktionsgefäßes 1 ist eine elektrisch betriebene Heizvorrichtung vorgesehen, die im wesentlichen aus einer Heizwendel 9 besteht, die das Reaktionsgefäß 1 im oberen und unteren Bereich 2, 3 in mehreren Windungen spiralförmig umschlingt und eine Beheizung der beiden Bereiche 2, 3 des Reaktionsgefäßes 1 ermöglicht.

Die Heizwirkung beruht hierbei auf den in der Heizwendel 9 auftretenden ohmschen Verlusten und daraus folgend der Wärmeleitung von der Heizwendel 9 über die Wandung des Reaktionsgefäßes 1 auf die zu erhitzende Flüssigkeit.

Da die Erwärmung der Flüssigkeit im wesentlichen von dem Verhältnis der wirksamen Heizfläche gegenüber dem zu erwärmenden Flüssigkeitsvolumen abhängt, weist das Reaktionsgefäß 1 im unteren Bereich 3 einen relativ kleinen Querschnitt auf. Hierbei wird vorteilhaft die Tatsache ausgenutzt, daß das Volumen einer zylindrischen Flüssigkeitssäule quadratisch mit dem Radius der Flüssigkeitssäule wächst, während die wirksame Heizfläche im wesentlichen gleich der Mantelfläche der zylindrischen Flüssigkeitssäule ist und somit proportional dem Radius ist. Das Verhältnis von Heizfläche und zu erhitzendem Flüssigkeitsvolumen wird also bei einer zylindrischen Flüssigkeitssäule mit abnehmender Querschnittsfläche immer günstiger.

Da der Kolben 5 im geschlossenen Zustand die Bodenfläche des Reaktionsgefäßes bildet, ist das untere Ende der in dem Reaktionsgefäß 1 befindlichen Flüssigkeitssäule durch die Lage des Kolbens 5 bestimmt. Im geschlossenen Zustand des Kolbens 5 ist die im unteren Bereich des Reaktionsgefäßes befindliche Flüssigkeitssäule auf ihrer gesamten Länge von den Windungen der Heizwendel 9 umgeben, so daß eine entsprechend gleichmäßige Erwärmung ohne "kalte Bereiche" erfolgt.

Der obere Bereich 2 dient dagegen zur Durchführung einer photometrischen Untersuchung der in dem Reaktionsgefäß 1 befindlichen Flüssigkeitsprobe und weist deshalb gegenüber dem unteren Bereich 3 einen vergrößerten Querschnitt auf, um eine möglichst große Schichtdicke des durchstrahlten Flüssigkeitsvolumens zu erreichen, was vorteilhaft zu einer erhöhten Meßempfindlichkeit führt.

Zur Durchführung der photometrischen Untersuchung ist seitlich eine Photodiode 11 angeordnet, die das Reaktionsgefäß 1 und die darin befindliche Flüssigkeitsprobe im oberen Bereich 2 durchstrahlt. Zur Erfassung des von Reaktionsgefäß 1 und Flüssigkeitsprobe durchgelassenen Lichts ist auf der gegenüberliegenden Seite im Strahlengang der Leuchtdiode 11 eine Photodiode 12 angeordnet. Aus der Änderung der Extinktion - also der Lichtabsorption durch die Flüssigkeitsprobe - nach Zusetzen einer Indikatorlösung läßt sich dann die Konzentration eines bestimmten Stoffs in der Flüssigkeitsprobe bestimmen.

Darüber hinaus dient der obere Bereich 2 zur Aufnahme des bei der Erhitzung der Flüssigkeit sich bildenden Dampfs. Um im oberen Bereich 2 eine Kondensation des Dampfs an den Wänden des Reaktionsgefäßes 1 zu verhindern, umschlingt die Heizwendel 9 das Reaktionsgefäß 1 deshalb auch im oberen Bereich 2.

Oftmals ist es günstig, die Flüssigkeitsprobe nach einer Erwärmung wieder abkühlen zu können. Das Reaktionsgefäß 1 ist deshalb von einer Ummantelung 13 umgeben, die die Führung eines kühlenden Luftstroms an der Außenseite des Reaktionsgefäßes 1 ermöglicht. Zur Erzeugung dieses Luftstroms ist ein Gebläse vorgesehen, das über ein flexibles Rohr mit einer an der Oberseite der Ummantelung 13 angeordneten und mit einem Anschlußstutzen 14 versehenen Öffnung verbunden ist. Der Luftstrom streicht somit an der Außenwand des Reaktionsgefäßes 1 vorbei und tritt durch eine an der Unterseite der Ummantelung 13 vorgesehene Austrittsöffnung 15 wieder aus, so daß ein kontinuierlicher Kühlmittelstrom mit einer effektiven Kühlwirkung erreicht wird.

Um die Erhitzung bzw. Abkühlung der Flüssigkeitsprobe steuern zu können, ist ein Temperaturfühler 16 vorgesehen, der die Wandung des Reaktionsgefäßes 1 im oberen Bereich 2 thermisch kontaktiert.

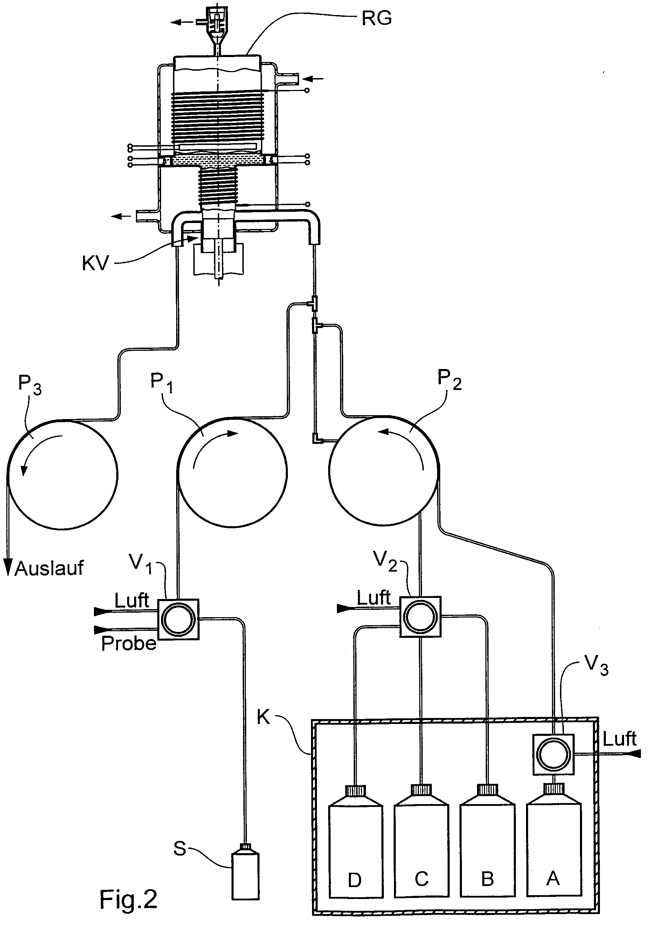

Aus der in Figur 2 gezeigten schematischen Darstellung ist die Anordnung des vorstehend beschriebenen Reaktionsgefäßes RG in einer photometrischen Untersuchungsanlage zur Bestimmung der Phosphorkonzentration einer Abwasserprobe ersichtlich. Zur Befüllung bzw. Entleerung des Reaktionsgefäßes RG sind hierbei drei schrittmotorgesteuerte Schlauchpumpen P₁, P₂, P₃ vorgesehen, wobei die eine Schlauchpumpe P₂ zur Befüllung des Reaktionsgefäßes RG mit verschiedenen Reagenzien dient, während die andere Schlauchpumpe P₁ das Reaktionsgefäß RG mit der zu untersuchenden Abwasserprobe befüllt. Die dritte Schlauchpumpe P₃ ermöglicht anschließend eine Entleerung des Reaktionsgefäßes RG.

Um eine Auswahl verschiedener Reagenzien zu ermöglichen, ist die Schlauchpumpe P₂ über ein schrittmotorgesteuertes Mehrwegventil V₂ mit mehreren Reagenz-Vorratsbehältern B, C, D verbunden, die in einem Kühlschrank K untergebracht sind. Durch Ansteuerung des Mehrwegventils V₂ läßt sich die Schlauchpumpe P₂ eingangsseitig mit einer der drei Reagenz-Vorratsbehälter B, C, D verbinden. Darüber hinaus ist es bei einer entsprechenden Stellung des Mehrwegventils P₂ möglich, Luft anzusaugen und in das Reaktionsgefäß RG zu pumpen.

Die Schlauchpumpe P₂ ist darüber hinaus mit dem Mehrwegventil V₃ verbunden, das es ermöglicht, wahlweise die in einem weiteren Vorratsbehälter A befindliche Reagenz oder Außenluft anzusaugen und in das Reaktionsgefäß RG zu pumpen.

Die andere Schlauchpumpe P₁ dient dagegen zur Befüllung des Reaktionsgefäßes RG mit der Abwasserprobe oder einer Standardprobe. Die Schlauchpumpe P₁ ist hierzu über ein Mehrwegventil V₁ mit der Abwasserprobenzuleitung und einem Behälter S verbunden, der die Standardprobe enthält. Darüber hinaus ermöglicht diese Schlauchpumpe P₁ - wie auch die zum Befüllen des Reaktionsgefäßes RG mit den Reagenzien bestimmte Schlauchpumpe P₂ - in einer entsprechenden Stellung des Mehrwegventils V₁ ein Ansaugen von Außenluft. Die dritte Schlauchpumpe P₃ dient dagegen lediglich zur Entleerung des Reaktionsgefäßes RG.

Zur Durchführung der Phosphorbestimmung wird nach einer Entleerung des Reaktionsgefäßes RG zunächst durch die Schlauchpumpe P₂ Reagenz A bzw. - im Falle der ortho-P Bestimmung - Reagenz B in das Reaktionsgefäß RG gepumpt. Das Mehrwegventil V₂ bzw. V₃ verbindet hierbei die Schlauchpumpe P₂ mit dem Vorratsbehälter A bzw. B. Nach der Befüllung des Reaktionsgefäßes RG mit dem Reagenz A bzw. B wird das Mehrwegventil V₂ bzw. V₃ in die Luftansaugstellung gebracht, so daß die Schlauchpumpe P₂ Außenluft ansaugt und in das Reaktionsgefäß RG pumpt. Dadurch wird die Verbindungsleitung zwischen Reaktionsgefäß RG und Mehrwegventil V₂ bzw. V₃ von den Resten der zuvor geförderten Reagenz freigespült.

Anschließend wird dann die andere Schlauchpumpe P₁ über das Mehrwegventil V₁ mit der Abwasserprobenzuleitung verbunden und eine Abwasserprobe in das Reaktionsgefäß RG gepumpt. Um die Verbindungsleitung zwischen Reaktionsgefäß RG und Mehrwegventil V₁ freizuspülen und darüber hinaus die in dem Reaktionsgefäß RG befindliche Reagenz mit der Abwasserprobe zu vermischen, wird das Mehrwegventil V₁ anschließend in die Luftansaugstellung gebracht, so daß Außenluft in das Reaktionsgefäß RG gepumpt wird. Die Durchmischung von Reagenz und Abwasserprobe beruht hierbei auf den Strömungen, die durch die aufperlenden Luftblasen in dem Reaktionsgefäß RG verursacht werden.

Nach der Befüllung des Reaktionsgefäßes RG in der vorstehend beschriebenen Weise wird das Kolbenventil KV an der Unterseite des Reaktionsgefäßes RG geschlossen und das in dem Reaktionsgefäß RG befindliche Gemisch aus Abwasserprobe und Reagenz auf eine hohe Temperatur erwärmt.

Die Erhitzung erfolgt hierbei durch eine Heizwendel, welche das Reaktionsgefäß RG in mehreren spiralförmigen Windungen umschlingt. Um eine exakte Einstellung einer vorgegebenen Temperatur zu ermöglichen, ist ein Temperaturfühler vorgesehen, dessen Ausgangssignal einem Regler zugeführt wird.

Durch die Erhitzung des Gemischs aus Reagenz und Abwasserprobe werden sämtliche organischen bzw. anorganischen Poly-P-Verbindungen innerhalb von wenigen Minuten zu ortho-Phosphor umgebaut.

Anschließend wird der Inhalt des Reaktionsgefäßes RG dann abgekühlt, indem mit einem Gebläse Außenluft in die das Reaktionsgefäß umgebende Ummantelung hineingeblasen wird. Die an der Eintrittsöffnung in die Ummantelung eintretende Luft streicht dann an der Außenwand des Reaktionsgefäßes vorbei, nimmt dabei Wärme auf und tritt entsprechend erwärmt an der Austrittsöffnung wieder aus der Ummantelung aus, so daß ein kontinuierlicher Kühlmittelstrom mit einer effektiven Kühlwirkung erreicht wird.

Nach der Abkühlung des Gemischs erfolgt dann für einen Nullpunktabgleich des Photometers eine erste photometrische Messung, indem das Reaktionsgefäß RG mit einer seitlich an dessen Außenseite angeordneten Infrarot-Leuchtdiode mit einer Wellenlänge von 880 nm durchleuchtet und mit einer auf der gegenüberliegenden Seite im Strahlengang der Leuchtdiode angeordneten Photodiode die Intensität des von Reaktionsgefäß RG und Flüssigkeitsgemisch durchgelassenen Lichts gemessen wird. Diese erste Messung ermöglicht noch keine Aussagen über die Zusammensetzung der Abwasserprobe, sondern bildet lediglich einen Vergleichswert für eine anschließende weitere Messung.

Nach diesem Nullpunktabgleich werden dann bei geöffnetem Kolbenventil KV über das Mehrwegventil V₂ nacheinander die Reagenzien C und D mittels der Schlauchpumpe P₂ in das Reaktionsgefäß RG gepumpt. Anschließend wird dann von der Schlauchpumpe P₂ Luft in das Reaktionsgefäß RG gepumpt, um die in dem Reaktionsgefäß RG befindliche Flüssigkeit durch die aufperlenden Luftblasen zu durchmischen.

Nach der Reaktionszeit erfolgt dann die photometrische Messung in der vorstehend beschriebenen Weise, deren Ergebnis durch Vergleich mit dem Ergebnis des Nullpunktabgleichs eine Bestimmung der Phosphorkonzentration ermöglicht.

Anschließend wird die mit den Reagenzien vermischte Abwasserprobe dann von der Schlauchpumpe P₃ über das Mehrwegventil V₁ zur Entsorgung in ein Auffanggefäß befördert.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Dabei kommen insbesondere andere Beheizungsmöglichkeiten in Betracht.

## Patentansprüche

1. Beheizbares Reaktionsgefäß (1, RG) zur Aufnahme einer Flüssigkeitsprobe, insbesondere für photometrische Untersuchungen, mit
einer ersten Öffnung (4) zum Einbringen der Flüssigkeitsprobe und einer zweiten Öffnung (10) zur Entleerung des Reaktionsgefäßes (1, RG),
einem steuerbaren Ventil (5) zum druckdichten Verschließen der ersten Öffnung (4) und/oder zweiten Öffnung (10),
einer die Außenwandung des Reaktionsgefäßes (1, RG) thermisch kontaktierenden Heizvorrichtung (9) zur Erhitzung der Flüssigkeitsprobe,
**dadurch gekennzeichnet**,
daß das Reaktionsgefäß (1, RG) einen unteren Bereich (3) zur Aufnahme der Flüssigkeitsprobe und einen oberen Bereich (2) zur Aufnahme des bei der Erhitzung der Flüssigkeitsprobe sich bildenden Dampfes aufweist, wobei der Querschnitt des unteren Bereichs (3) zur Verbesserung des Verhältnisses von beheizbarer Außenfläche und zu erhitzendem Flüssigkeitsvolumen kleiner ist als der Querschnitt des oberen Bereichs (2) und/oder
daß die Öffnungen (4, 10) im unteren Bereich (3) des dort zylinderförmig ausgebildeten Reaktionsgefäßes (1, RG) vorgesehen sind und das Ventil einen an den Innenquerschnitt des Reaktionsgefäßes (1, RG) in der Umgebung der Öffnungen (4, 10) angepaßten verschiebbaren Kolben (5) zum Verschließen der Öffnungen (4, 10) aufweist, wobei insbesondere die dem Innenraum des Reaktionsgefäßes (1, RG) zugewandte Deckfläche des Kolbens (5) in Schließstellung des Kolbens (5) eine Begrenzung des beheizten Volumens des unteren Bereichs (3) bildet.

2. Reaktionsgefäß (1, RG) nach Anspruch 1, **dadurch gekennzeichnet**, daß die Heizvorrichtung (9) zur Erhitzung der Flüssigkeitsprobe und des sich bei deren Erhitzung bildenden Dampfes die Außenwand des Reaktionsgefäßes (1, RG) sowohl im ersten Bereich als auch im zweiten Bereich thermisch kontaktiert.

3. Reaktionsgefäß (1, RG) nach einem der vorhergehenden Ansprüche, **dadurch gekennzeichnet**, daß die Heizvorrichtung (9) einen das Reaktionsgefäß (1, RG) umschlingenden elektrisch erhitzbaren Heizdraht aufweist.

4. Reaktionsgefäß (1, RG) nach einem der vorhergehenden Ansprüche, **dadurch gekennzeichnet**, daß zur Temperaturbestimmung ein im Inneren des Reaktionsgefäßes (1, RG) angeordneter oder das Reaktionsgefäß (1, RG) thermisch kontaktierender Thermofühler vorgesehen ist.

5. Reaktionsgefäß (1, RG) nach einem der vorhergehenden Ansprüche, **dadurch gekennzeichnet**, daß im oberen Bereich des Reaktionsgefäßes (1, RG) ein Sicherheitsventil (6) zur Dampfabgabe beim Überschreiten eines zulässigen Maximaldrucks vorgesehen ist.

6. Reaktionsgefäß (1, RG) nach einem der vorhergehenden Ansprüche, **dadurch gekennzeichnet**,
daß die Wandung des Reaktionsgefäßes (1, RG) zur Ermöglichung einer photometrischen Untersuchung mindestens teilweise lichtdurchlässig ist,
daß zur Durchstrahlung der Flüssigkeitsprobe eine Lichtquelle (11) vorgesehen ist,
daß auf der der Lichtquelle (11) gegenüberliegenden Seite im Strahlengang der Lichtquelle (11) ein Photoempfänger (12) vorgesehen ist zum Empfang des von der Flüssigkeitsprobe durchgelassenen Lichts.

7. Reaktionsgefäß (1, RG) nach Anspruch 6, **dadurch gekennzeichnet**, daß die Lichtquelle (11) eine Leuchtdiode und/oder der Photoempfänger (12) eine Photodiode ist.

8. Reaktionsgefäß (1, RG) nach einem der vorhergehenden Ansprüche 6 oder 7, **dadurch gekennzeichnet**, daß zur Messung der Intensität des von der Lichtquelle emittierten Lichts zwecks Kompensation einer Intensitätsschwankung der Lichtquelle ein zweiter Photoempfänger vorgesehen, der im Strahlengang der Lichtquelle angeordnet ist.

9. Reaktionsgefäß (1, RG) nach einem der vorhergehenden Ansprüche, **dadurch gekennzeichnet**, daß zur Kühlung der Flüssigkeitsprobe eine das Reaktionsgefäß (1, RG) mindestens teilweise umschließende Ummantelung (13) vorgesehen ist, die eine Eintrittsöffnung zum Einbringen eines Kühlmittels und eine Austrittsöffnung zum Austreten des Kühlmittels aufweist.

10. Reaktionsgefäß (1, RG) nach Anspruch 9, **dadurch gekennzeichnet**, daß als Kühlmittel Luft vorgesehen ist und die Eintrittsöffnung zur Förderung des Kühlmittels mit einem Gebläse verbunden ist.
